# EUROPÄISCHE PATENTSCHRIFT

(11) **EP 1 245 964 B1**
(45) Veröffentlichungstag und Bekanntmachung des Hinweises auf die Patenterteilung: **29.09.2004**
(21) Anmeldenummer: 01130051.4
(22) Anmeldetag: 18.12.2001
(51) Int. Cl.: G01S 13/18, G01S 13/93

(54) **Verfahren zur Generierung und Auswertung von Radarpulsen sowie Radarsensor**
Method for generation and evaluation of radar pulses and a radarsensor
Procédé de génération et d'évaluation des impulsions de radar et un détecteur radar

(30) Priorität: 31.03.2001 DE 10116188
(43) Veröffentlichungstag der Anmeldung: 02.10.2002
(73) Patentinhaber: ROBERT BOSCH GMBH, 70442 Stuttgart (DE)
(72) Erfinder: Steinbuch, Dirk, 71229 Leonberg (DE)

(56) Entgegenhaltungen:
- EP-A- 0 122 854
- DE-A- 19 749 325
- DE-A- 19 902 185
- US-A- 4 492 960
- US-A- 5 872 537
- US-A- 5 949 365
- PATENT ABSTRACTS OF JAPAN vol. 2000, no. 05, 14. September 2000 (2000-09-14) & JP 2000 046937 A (MITSUBISHI ELECTRIC CORP), 18. Februar 2000 (2000-02-18)

## Beschreibung

Die Erfindung geht aus von einem Verfahren zur Generierung und Auswertung von Radarpulsen, insbesondere für Nachbereichs- Pulsradar- Anwendungen bei Kraftfahrzeugen.

### Stand der Technik

In der Kraftfahrzeugtechnik werden Radarsensoren für die Messung des Abstandes zu Zielen und/oder der Relativgeschwindigkeit bezüglich solcher Ziele außerhalb des Kraftfahrzeuges eingesetzt. Als Ziele kommen z.B. vorausfahrende oder parkende Kraftfahrzeuge, Fußgänger, Radfahrer oder Einrichtungen im Umfeld des Kraftfahrzeuges in Frage.

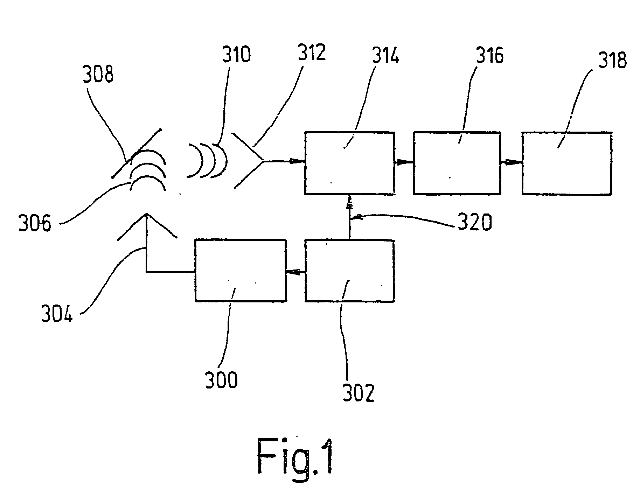

Figur 1 zeigt eine schematische Darstellung einer Radareinrichtung mit einem Korrelationsempfänger des Standes der Technik. Ein Sender 300 wird durch eine Pulserzeugung 302 veranlasst, über eine Antenne 304 ein Sendesignal 306 abzustrahlen. Das Sendesignal 306 trifft auf ein Zielobjekt 308, wo es reflektiert wird. Das Empfangssignal 310 wird von der Antenne 312 empfangen. Diese Antenne 312 kann mit der Antenne 304 identisch sein. Nach dem Empfang des Empfangssignals 310 durch die Antenne 312 wird dieses dem Empfänger 314 übermittelt und nachfolgend über eine Einheit 316 mit Tiefpass und Analog/- Digitalwandlung einer Signalauswertung 318 zugeführt. Die Besonderheit bei einem Korrelationsempfänger besteht darin, dass der Empfänger 314 von der Pulserzeugung 302 ein Referenzsignal 320 erhält. Die von dem Empfänger 314 empfangenen Empfangssignale 310 werden in dem Empfänger 314 mit dem Referenzsignal 320 gemischt. Durch die Korrelation kann auf der Grundlage der zeitlichen Verzögerung vom Aussenden bis zum Empfangen der Radarimpulse beispielsweise auf die Entfernung eines Zielobjektes geschlossen werden.

Aus der DE 199 26 787 ist eine ähnliche Radareinrichtung bekannt. Dabei wird ein Sendeschalter durch die Impulse eines Generators ein- und ausgeschaltet, so dass während der Pulsdauer eine von einem Oszillator generierte und über eine Gabelung auf den Sendeschalter geleitete Hochfrequenzwelle zur Sendeantenne durchschaltet. Ein Empfangsteil erhält ebenfalls das Ausgangssignal des Generators. Das Empfangssignal, d.h. ein an einem Objekt reflektierter Radarpuls, wird mit dem Oszillatorsignal, das über einen Empfangsschalter zu einem Mischer gelangt, während eines vorgegebenen Zeittores gemischt und ausgewertet .
Auch die US 6, 067, 040 arbeitet mit einem Sendeschalter, der durch Impulse eines Generators ein- und ausgeschaltet wird. Für den Empfang der reflektierten Radarpulse sind getrennte Züge für I- und Q-Signale vorgesehen.
Auch hier wird das Empfangssignal nur während eines vorgegebenen Zeittores gemischt und ausgewertet.

Aus der DE 197 49 325 ist einen Sende/Empfangsschalter für den mm-Wellenlängenbereich bekannt.

### Vorteile der Erfindung

Mit den Maßnahmen der Erfindung ist eine verlässliche Erfassung von Objekten möglich. Rauschprobleme spielen im Gegensatz zu den Lösungen des Standes der Technik nur eine untergeordnete Rolle. Außerdem werden einige HF-Komponenten, wie z.B. Hochfrequenzschalter, eingespart, die eine einfachere, wenig aufwendige und damit kostengünstigere Realisierung eines Radarsensors gestatten.

Die Erfindung ermöglicht ein Radarkonzept, welches das benötigte schnelle Schalten im Bereich von einigen 100 ps zur Erfassung von Objekten im Umfeld eines Kraftfahrzeuges, das beim herkömmlichen SRR (Short Range Radar) auf der HF-Seite geschieht, auf die NF- bzw. ZF- Seite verlagert. Die Funktion Mischen und Schalten kann in einem Bauteil vereinigt werden.

Es ist bei dem erfindungsgemäßen Konzept nur eine Antenne erforderlich, die zum Senden und Empfangen von Radarpulsen gleichzeitig benutzt wird. Die Sensorgröße verkleinert sich dadurch wesentlich. Bei der erfindungsgemäßen Lösung ist ein kontinuierliches Signal einer Hochfrequenzquelle über mindestens einen Mischer mit einer Antenne verbindbar. Zur Generierung eines Radarpulses wird der Mischer kurzzeitig in einen Zustand niedriger Durchgangsdämpfung gebracht. Das Signal der Hochfrequenzquelle kann dann den Mischer passieren und gelangt zur Antenne. Unmittelbar nach Generieren und Aussenden des Radarpulses wird der Mischer in den Empfangsmodus umgeschaltet und wartet auf Rückkehr des ausgesendeten Radarpulses, der an einem Objekt reflektiert wurde. Die Laufzeit ist ein Maß für die Entfernung des Objekts. Der Mischer generiert beim Empfang des Radarpulses zusammen mit dem kontinuierlichen Signal der Hochfrequenzquelle einen NF- bzw. ZF- Puls, der die Hüllkurve des HF- Pulses repräsentiert und ausgewertet werden kann.

Mit der Erfindung kann der Detektionsbereich eines Radarsensors bei einer Arbeitsfrequenz von 24.125 GHz auf bis zu 100 m gesteigert werden, da die Empfangssignale der zu detektierenden Objekte je nach Objektcharakteristik nicht wie sonst üblich im Rauschen untergehen. Eine verlässliche Objekterfassung ist damit möglich.

Um I/Q- Fähigkeit des Radars zu erreichen, sind gemäß der Ausgestaltung des Anspruchs 2 zwei Mischer für das Inphase (I)-ZF -Signal und das Quadratur (Q)-ZF- Signal zusammengeschaltet.

Die Steuerung des/der Mischer/s in den Zustand niedriger Durchgangsdämpfung erfolgt gemäß der Ausgestaltung des Anspruchs 3 dadurch, dass der Zwischenfrequenzausgang des/der Mischer/s mit einer Stromquelle verbunden werden. Das entstehende Mischsignal- ZF- Ausgangssignal des Mischers - wird gemäß Anspruch 4 breitbandig verstärkt und abgetastet.

Nach Anspruch 5 wird die Verstärkung und Abtastung des Mischsignals für das I- und Q- ZF- Signal getrennt vorgenommen.

Zur Abtastung des Mischsignals wird nach Anspruch 6 ein breitbandiger Abtaster mit einem sehr kurzen Abtastpuls beaufschlagt, dessen Zeitpunkt einer gewählten Entfernungszelle entspricht.

Anspruch 7 zeigt einen Radarsensor nach der Erfindung auf. Die Ansprüche 8 bis 13 zeigen vorteilhafte Ausgestaltungen dieses Radarsensors.

### Zeichnungen

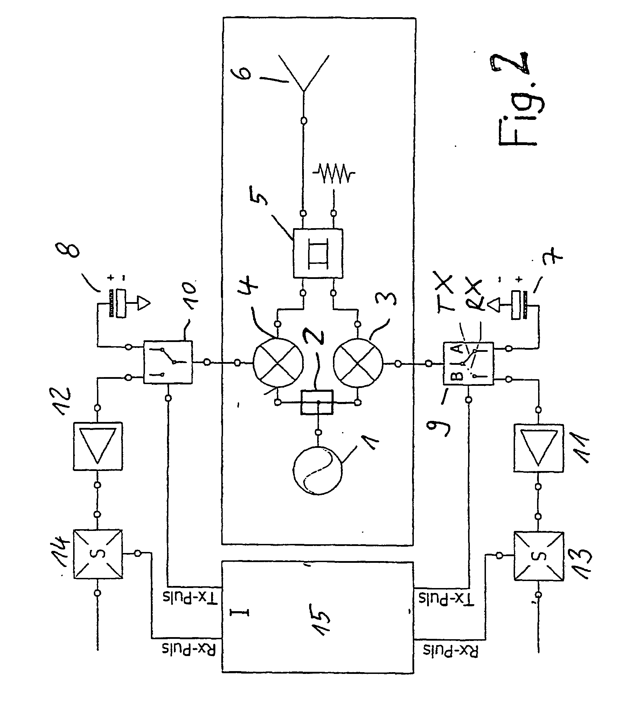

Figur 2 zeigt einen Radarsensor nach der Erfindung.

### Beschreibung von Ausführungsbeispielen

Der in Figur 2 dargestellte erfindungsgemäße Radarsensor weist eine Hochfrequenzquelle 1 auf, die ein kontinuierliches Hochfrequenzsignal (CW- Signal) liefert. Über eine Gabelschaltung 2 gelangt dieses Hochfrequenzsignal an die Eingänge zweier Mischer 3 und 4. Die Ausgänge dieser Mischer sind über einen Leistungsteiler 5, z.B. einen 3dB-Leistungsteiler mit der Antenne 6 verbunden. Es sind in diesem Ausführungsbeispiel zwei Mischer 3 und 4 vorgesehen, um eine I/Q- Fähigkeit des Radarsensors zu erreichen. Wenn man auf die I/Q- Fähigkeit verzichten will, genügt ein Mischer. Selbstverständlich erübrigen sich dann auch die Baueinheiten 2 und 5. Die Mischer 3 und 4 sind beispielsweise als balancierte Mischer in Form eines RAT-RACE- Hybrides realisiert (vergleiche hierzu insbesondere die EP 685 930 A1, die den Aufbau eines solchen RAT- RACE-Hybrides beschreibt). Der gesamte HF-Teil des Radarsensors ist in Fig.2 umrahmt.

Die Isolation des Mischers bzw. der Mischer vom Signalausgang der Hochfrequenzquelle 1 zum Mischerausgang in Senderichtung bzw. zum Empfangspulseingang in Empfangsrichtung beträgt typischerweise 20 bis 26 dB. Durch Einspeisung eines Gleichstromes in den Zwischenfrequenz (ZF)- Ausgang des Mischers 3 bzw. 4 kann die Isolation auf typischerweise 2 bis 3 dB gebracht werden. Wird dieser Strom für z.B. 1 ns eingeprägt, so wird ein 1 ns breiter HF- Puls erzeugt und ausgesendet. Das Ein-/ Ausverhältnis ergibt sich um etwa 20 dB. Schlagartig nach dem Einprägen des Stromes durch die Stromquelle 7 bzw. 8 über den Schalter 9 bzw. 10 in der gezeigten Schalterstellung A (Sendemodus) wird von der Stromquelle 6 bzw. 7 weg (Umschalten in Schalterstellung B - Empfangsmodus) auf einen breitbandigen Verstärker 11 bzw. 12 geschaltet und auf einen von einem Objekt reflektierten Empfangspuls gewartet, der über die gleich Antenne 6 empfangen wird. Ist ein reflektierter Radarpuls von der Antenne 6 über den Leistungsteiler 5 zum Mischer 3 bzw. 4 gelangt, so wird aus dem kontinuierlichen Signal der Hochfrequenzquelle 1 und dem reflektierten Radarpuls die Hüllkurve des Empfangspulses (ZF- Signal) gebildet. Diese/s Mischsignal/ Hüllkurve wird durch den breitbandigen ZF-Verstärker 11 bzw. 12 einer Bandbreite von z.B. 1 MHz bis 1 GHz verstärkt und dem Empfangs- Abtaster 13 bzw. 14 zugeführt. Dies geschieht für den I- und den Q- Kanal getrennt (getrennte Empfangs- und Auswertezüge für das I-und Q- Empfangssignal). Der Mischer 3 bzw. gegebenenfalls auch der Mischer 4 muss dabei eine ZF- Bandbreite von ebenfalls 1 GHz haben, um den reflektierten Radarpuls nicht zu verbreitern und damit Objektauflösung zu verlieren.

Um die Laufzeit des empfangenen Radarpulses vergleichen zu können und daraus eine Entfernungsinformation zu erhalten, ist eine Verzögerungsschaltung identisch mit derjenigen des SRR (Short- Range- Radar) erforderlich. Nach einer definierten Zeit nach der Generierung des Sendepulses, die der Pulslaufzeit für die gewünschte Entfernungszelle entspricht, wird ein breitbandiger Abtaster 13 bzw. 14 mit einem sehr kurzen Abtastpuls beaufschlagt und tastet das Ausgangssignal des ZF- Verstärkers 11 bzw. 12 in der gewählten Entfernungszelle ab. Die Länge des Abtastpulses ist dabei in der Größenordnung der Sendepuls- und ZF-Pulsbreite. Dies geschieht in der Rate der Erzeugung der Sendepulse, nur entsprechend verzögert. Die Variation der Verzögerungszeit erlaubt das Abtasten des gewünschten Entfernungsbereiches identisch dem SRR. Der Abtaster detektiert von Null verschiedene Spannungen und erkennt damit die Pulsrückkehr nach der gewünschten Laufzeit. Nichtkohärente Pulsintegration ist möglich, die das Signal-Rauschverhältnis proportional zu SQRT (n) verbessert, wobei n die Anzahl der integrierten Pulse ist. Die Aufbereitung der Abtastpulse für die Abtaster 13 und 14 sowie die Steuerpulse für die Schalter 9 und 10 geschieht durch die Steuereinheit 15, die auch die entsprechende Verzögerungszeiten für das Umschalten der Schalter 9 und 10 und die Generierung der Abtastpulse zur Verfügung stellt.

Durch die Architektur des erfindungsgemäßen Radarsensors ergeben sich folgende weitere Vorteile:
Dadurch, dass das Signal der Hochfrequenzquelle 1 als CW-Signal ständig am Mischer 3 bzw. 4 anliegt und nicht, wie beim SRR, gepulst wird, ergibt sich eine wesentliche Verbesserung der Rauschzahl und damit die Möglichkeit den Detektionsbereich effektiv zu erweitern.

Die offensichtlich erreichbare Stördopplerunterdrückung, die dem An-/ Ausverhältnis des Mischers 3 bzw. 4 entspricht, ist mit 20 dB sehr schlecht. Allerdings ist das belanglos, da das generierte Mischsignal, das die Hüllkurve des HF-Empfangspulses repräsentiert, durch einen Verstärker mit einer unteren Grenzfrequenz von einigen Megahertz verstärkt wird. Stördoppleranteile im Bereich von maximal 10 KHz können nicht verstärkt werden und bleiben wirkungslos.

Wie das Blockschaltbild gemäß Figur 2 zeigt, steigt der Aufwand auf der ZF- bzw. NF- Seite. Die entsprechenden Komponenten in diesen Frequenzbereichen sind jedoch weniger anfällig gegen Störeinflüsse und verfälschen so die Messergebnisse bedeutend geringer. Außerdem sind sie kleiner und damit leichter integrierbar.

## Patentansprüche

1. Verfahren zur Generierung und Auswertung von Radarpulsen, insbesondere für Nahbereichs- Pulsradaranwendungen bei Fahrzeugen mit folgenden Schritten:
- ein kontinuierliches Signal einer Hochfrequenzquelle (1) ist über mindestens einen Mischer (3, 4) mit einer Antenne (6) verbindbar,
- zur Generierung eines Radarpulses wird der Mischer (3, 4) kurzzeitig im Bereich von einigen 100 ps in einen Zustand niedriger Durchgangsdämpfung gesteuert,
- nach Generierung und Aussenden des Radarpulses wird der Mischer (3, 4) in den Empfangsmodus umgeschaltet, um das Mischsignal, welches das Empfangssignal, insbesondere mindestens ein an einem Objekt reflektierter Radarpuls, mit dem Signal der Hochfrequenzquelle (1) bildet, auszuwerten.

2. Verfahren nach Anspruch 1, **dadurch gekennzeichnet, dass** das kontinuierliche Signal der Hochfrequenzquelle (1) sowie das Empfangssignal derart über zwei Mischer (3, 4) geführt sind, dass an einem ersten dieser Mischer (3) ein Inphase- ZF- Signal und am zweiten Mischer (4) ein Quadratur- ZF- Signal auswertbar ist.

3. Verfahren nach Anspruch 1 oder 2, **dadurch gekennzeichnet, dass** die Steuerung des/der Mischer/s (3, 4) in den Zustand niedriger Durchgangsdämpfung dadurch erfolgt, dass der Zwischenfrequenzausgang des/der Mischer/s (3, 4) mit einer Stromquelle (6, 7) verbunden wird.

4. Verfahren nach einem der Ansprüche 1 bis 3, **dadurch gekennzeichnet, dass** das Mischsignal breitbandig verstärkt und abgetastet wird.

5. Verfahren nach Anspruch 2 und 4, **dadurch gekennzeichnet, dass** die Verstärkung und die Abtastung des Mischsignals für das Inphase- und das Quadratur- ZF- Signal getrennt vorgenommen wird.

6. Verfahren nach einem der Ansprüche 4 oder 5, **dadurch gekennzeichnet, dass** zur Abtastung des Mischsignals ein breitbandiger Abtaster (13, 14) mit einem sehr kurzen Abtastpuls beaufschlagt wird, dessen Zeitpunkt einer gewählten Entfernungszelle entspricht.

7. Radarsensor zur Generierung und Auswertung von Radarpulsen insbesondere für Nachbereichs-Pulsradaranwendungen bei Fahrzeugen, bestehend aus:
- einer Hochfrequenzquelle (1), die über mindestens einen Mischer (3, 4) mit einer Antenne (6) verbunden ist und die ein kontinuierliches Signal erzeugt,
- einer Einrichtung (7, 8, 9, 10), die geeignet ist, den Mischer (3, 4) zur Generierung eines Radarpulses kurzzeitig im Bereich von einigen 100 ps in einen Zustand niedriger Durchgangsdämpfung zu bringen,
- eine Einrichtung (9, 10) zum Umschalten des Mischers (3, 4) in den Empfangsmodus,
- eine Auswerteeinrichtung (11, 12, 13, 14) zur Auswertung des Mischausgangssignals, welches das Signal der Hochfrequenzquelle (1) mit dem Empfangssignal, insbesondere mindestens ein an einem Objekt reflektierter Radarpuls, bildet.

8. Radarsensor nach Anspruch 7, **dadurch gekennzeichnet, dass** zwei Mischer (3, 4) vorgesehen sind zur Bildung eines Inphase- und eines Quadratur- ZF- Signals.

9. Radarsensor nach Anspruch 8, **dadurch gekennzeichnet, dass** die beiden Mischer (3, 4) als Balance- Mischer insbesondere in Form eines RAT- RACE realisiert sind.

10. Radarsensor nach einem der Ansprüche 7 bis 9, **dadurch gekennzeichnet, dass** die Einrichtung (7, 8, 9, 10) zum Steuern des/der Mischer/s (3, 4) in den Zustand niedriger Durchgangsdämpfung dadurch realisiert ist, dass der Zwischenfrequenzausgang des/der Mischer/s (3, 4) während der Zeit der Generierung eines Radarpulses mit einer Stromquelle (7, 8) verbunden ist.

11. Radarsensor nach einem der Ansprüche 7 bis 10, **dadurch gekennzeichnet, dass** zur Auswertung des Mischerausgangssignals ein Breitbandverstärker (11, 12) vorgesehen ist, der insbesondere eine untere Grenzfrequenz aufweist, die so hoch gewählt ist, dass Stördopplereffekte unterhalb dieser unteren Grenzfrequenz liegen.

12. Radarsensor nach einem der Ansprüche 7 bis 10, **dadurch gekennzeichnet, dass** zur Auswertung des insbesondere verstärkten Mischerausgangssignals ein breitbandiger Abtaster (13, 14) vorgesehen ist, der geeignet ist, das Mischerausgangssignal mit einem kurzen Abtastimpuls zu einem Zeitpunkt abzutasten, der einer gewählten Entfernungszelle entspricht.

13. Radarsensor nach einem der Ansprüche 8 bis 12, **dadurch gekennzeichnet, dass** für das Inphase- und das Quadratur-ZF- Signal getrennte Empfangs- und Auswertezüge vorgesehen sind.

## Claims

1. Method for generation and evaluation of radar pulses, in particular for short-range pulsed radar applications for vehicles, having the following steps:
- a continuous signal from a radio-frequency source (1) can be connected via at least one mixer (3, 4) to an antenna (6),
- in order to generate a radar pulse, the mixer (3, 4) is briefly switched, for a period in the region of a few hundred picoseconds, to a state with a low throughput attenuation,
- after generation and transmission of the radar pulse, the mixer (3, 4) is switched to the receiving mode, in order to evaluate the mixed signal which the received signal, in particular at least one radar pulse that is reflected on an object, forms with the signal from the radio-frequency source (1).

2. Method according to Claim 1, **characterized in that** the continuous signal from the radio-frequency source (1) as well as the received signal are passed via two mixers (3, 4) such that an in-phase IF signal can be evaluated in a first of these mixers (3), and a quadrature IF signal can be evaluated in the second mixer (4).

3. Method according to Claim 1 or 2, **characterized in that** the mixer or mixers (3, 4) is or are switched to the low throughput attenuation state by connecting the intermediate frequency output of the mixer or mixers (3, 4) to a current source (6, 7).

4. Method according to one of Claims 1, to 3, **characterized in that** the mixed signal is amplified and sampled with a broad bandwidth.

5. Method according to Claims 2 and 4, **characterized in that** the amplification and sampling of the mixed signal are carried out separately for the in-phase and quadrature IF signals.

6. Method according to one of Claims 4 or 5, **characterized in that** a very short sampling pulse is applied to a broadband sampler (13, 14) in order to sample the mixed signal, the time of which sampling pulse corresponds to a chosen range cell.

7. Radar sensor for generation and evaluation of radar pulses in particular for short-range pulsed radar applications for vehicles, comprising:
- a radio-frequency source (1) which is connected to an antenna (6) via at least one mixer (3, 4) and produces a continuous signal,
- a device (7, 8, 9, 10) which is suitable for switching the mixer (3, 4) to a state with a low throughput attenuation briefly, for a period in the region of a few hundred picoseconds, in order to generate a radar pulse,
- a device (9, 10) for switching the mixer (3, 4) to the receiving mode, and
- an evaluation device (11, 12, 13, 14) for evaluation of the mixed output signal, which forms the signal from the radio-frequency source (1) with the received signal, in particular at least one radar pulse which is reflected on an object.

8. Radar sensor according to Claim 7, **characterized in that** two mixers (3, 4) are provided, in order to form an in-phase and a quadrature IF signal.

9. Radar sensor according to Claim 8, **characterized in that** the two mixers (3, 4) are balanced mixers, in particular in the form of a RAT-RACE.

10. Radar sensor according to one of Claims 7 to 9, **characterized in that** the device (7, 8, 9, 10) for switching the mixer or mixers (3, 4) to the low throughput attenuation state is designed such that the intermediate-frequency output of the mixer or mixers (3, 4) is connected to a current source (7, 8) during the time in which a radar pulse is being generated.

11. Radar sensor according to one of Claims 7 to 10, **characterized in that** a broadband amplifier (11, 12) is provided for evaluation of the mixer output signal and, in particular, has a lower cut-off frequency which is chosen to be sufficiently high that interference Doppler effects are below this lower cut-off frequency.

12. Radar sensor according to one of Claims 7 to 10, **characterized in that** a broadband sampler (13, 14) is provided for evaluation of the, in particular amplified, mixer output signal, and is suitable for sampling the mixer output signal with a short sampling pulse at a time which corresponds to a chosen range cell.

13. Radar sensor according to one of Claims 8 to 12, **characterized in that** separate reception and evaluation paths are provided for the in-phase and quadrature IF signals.

## Revendications

1. Procédé pour générer et évaluer les impulsions radar notamment pour des applications de radar impulsionnelles du domaine proche appliquées à des véhicules automobiles et comprenant les étapes suivantes :
- un signal continu d'une source haute fréquence (1) est appliqué par au moins un mélangeur (3, 4) à une antenne (6),
- pour générer une impulsion radar on commande le mélangeur (3, 4) brièvement dans le domaine de quelques 100 ps pour le faire passer dans un état de faible atténuation de passage,
- après génération et émission de l'impulsion radar on commute le mélangeur (3, 4) en mode de réception pour exploiter le signal de mélange constitué par le signal de réception notamment l'impulsion radar réfléchie par un objet avec le signal de la source haute fréquence (1).

2. Procédé selon la revendication 1,
**caractérisé en ce que**
le signal continu de la source haute fréquence (1) ainsi que le signal de réception passent par deux mélangeurs (3, 4) pour exploiter dans un premier mélangeur (3) le signal de fréquence intermédiaire en phase et dans le second mélangeur (4) le signal intermédiaire en quadrature.

3. Procédé selon la revendication 1 ou 2,
**caractérisé en ce que**
la commande du où des mélangeurs (3, 4) se fait dans un état d'amortissement de transmission faible en reliant la sortie de fréquence intermédiaire du ou des mélangeurs (3, 4) à une source de courant (6, 7).

4. Procédé selon l'une des revendications 1 à 3,
**caractérisé en ce qu'**
on amplifie et on détecte le signal de mélange en bande large.

5. Procédé selon les revendications 2 et 4,
**caractérisé en ce qu'**
on amplifie et on détecte le signal de mélange séparément pour le signal intermédiaire en phase et le signal intermédiaire en quadrature.

6. Procédé selon l'une des revendications 4 ou 5,
**caractérisé en ce que**
pour détecter le signal de mélange on fournit une impulsion de détection très brève à un détecteur à bande large (13, 14) dont l'instant correspond à une cellule d'éloignement choisie.

7. Capteur radar pour générer et exploiter les impulsions radar notamment pour des applications de radar impulsionnelles dans le domaine proche équipant des véhicules comprenant :
- une source haute fréquence (1) reliée à une antenne (6) par au moins un mélangeur (3, 4) et générant un signal continu,
- une installation (7, 8, 9, 10) qui amène le mélangeur (3, 4) à générer une impulsion radar, brièvement dans une plage de quelques 100 ps dans un état d'amortissement de passage faible,
- une installation (9, 10) pour commuter le mélangeur (3, 4) en mode de réception,
- une installation d'exploitation (12, 13, 14) pour exploiter le signal de sortie du mélangeur, et qui forme le signal de la source haute fréquence (1) avec le signal de réception, notamment avec au moins une impulsion radar réfléchie par un objet.

8. Capteur radar selon la revendication 7,
**caractérisé par**
deux mélangeurs (3, 4) pour former un signal de fréquence intermédiaire en phase et de fréquence intermédiaire en quadrature.

9. Capteur radar selon la revendication 8,
**caractérisé en ce que**
les deux mélangeurs (3, 4) sont réalisés sous la forme de mélangeur d'équilibrage en particulier sous la forme d'un mélangeur RAT-RACE.

10. Capteur radar selon l'une des revendications 7 à 9,
**caractérisé en ce que**
l'installation (7, 8, 9, 10) pour commander le ou les mélangeurs (3, 4) dans un état d'amortissement de transmission faible est réalisée en reliant la sortie de fréquence intermédiaire du ou des mélangeurs (3, 4) à une source de courant (7, 8) pendant la durée de génération d'une impulsion radar.

11. Capteur radar selon l'une des revendications 7 à 10,
**caractérisé par**
un amplificateur en bande large (11, 12) pour générer le signal de sortie du mélangeur, cet amplificateur ayant notamment une fréquence limite inférieure choisie suffisamment élevée pour que l'effet Doppler, perturbateur se trouve en dessous de cette fréquence limite inférieure.

12. Capteur radar selon l'une des revendications 7 à 10,
**caractérisé par**
un détecteur à bande large (13, 14) pour exploiter en particulier le signal de sortie de mélangeur, amplifié, ce détecteur permettant de détecter le signal de sortie de mélangeur avec une impulsion de détection brève à un instant qui correspond à la cellule d'éloignement choisie.

13. Capteur radar selon l'une des revendications 8 à 12,
**caractérisé par**
des chemins de réception et d'exploitation distincts pour les signaux de fréquence intermédiaire en phase et en quadrature.
